# EUROPEAN PATENT SPECIFICATION

(11) **EP 1 688 333 B1**
(45) Date of publication and mention of the grant of the patent: **09.01.2008**
(21) Application number: 06101236.5
(22) Date of filing: 03.02.2006
(51) Int. Cl.: B60T 17/22

(54) **Device for monitoring wear of friction elements for a vehicle braking system**
Einrichtung für das Beobachten des Verschleisses der Bremsbeläge eines Fahrzeugbremssystems
Dispositif de supervision d'usure des éléments de friction pour une système de freinage de véhicule

(30) Priority: 04.02.2005 IT TO20050061
(43) Date of publication of application: 09.08.2006
(73) Proprietor: I.C.P. S.r.l., 14020 Piova' Massaia (IT)
(72) Inventor: Razzano, Tancredi, 14020, Piova' Massaia (IT)
(74) Representative: Jorio, Paolo

(56) References cited:
- EP-A- 0 704 639
- DE-U1- 20 213 829
- US-A- 5 791 441

## Description

The present invention relates to a device for monitoring the wear of friction elements for a vehicle braking system.
The present invention is advantageously applied on trailers or semi trailers of industrial vehicles, to which the following description will explicitly refer without loss of generality.
As is known, for example, from DE 202 13 829 U1, EP-A-0704639 or US-A-5 791 441 devices for monitoring the wear of friction elements of a braking system, in which wear sensors are applied to respective friction elements, are available on the market; said sensors are connected to a signal acquisition electronic control unit via an interconnection cable. The interconnection cable uses a plurality of bipolar wires, each of which individually connects the electronic control unit to a respective sensor.

This solution, however, has the drawback of being costly and cumbersome as it requires the installation of a bipolar wire for each sensor.

The aim of the present invention is to produce a device for monitoring the wear of friction elements of a vehicle braking system, which does not have the drawbacks described above and, at the same time, is easy and inexpensive to produce.

According to the present invention, a device for monitoring the wear on pads of a vehicle braking system is produced, as described in claim 1.

The present invention will now be described with reference to the attached drawings, which show a non-limiting implementation example, in which:
- figure 1 shows schematically a first preferred embodiment of a monitoring device of the present invention;
- figure 2 shows in greater detail a portion of the device of figure 1;
- figure 3 shows a variation of a detail of figure 2;
- figure 4 shows a flow chart which summarises the operations performed by the device of figure 1; and
- figure 5 shows a flow chart which summarises the operations performed by the monitoring device according to the variation of figure 2.

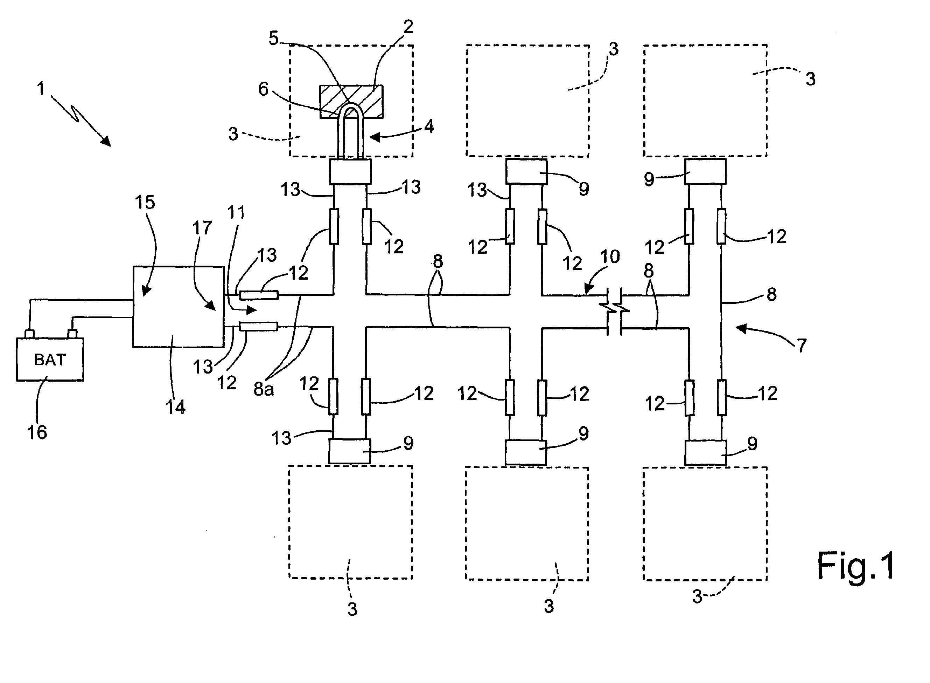

In figure 1, 1 indicates generically, as a whole, a device for monitoring the wear of friction elements 2 (for example a pad) of a vehicle braking system (not shown). Said braking system comprises a number N of braking devices 3, each of which is combined with a respective wheel (not shown) of the vehicle and is provided with a relative friction element 2 intended to exert friction on a related element integral with said wheel.

In the example shown in figure 1, each braking device 3 is of the disc type and comprises a respective caliper (not shown) intended to close around a relative disc (not shown), at least one respective pad 2 mounted on said caliper, and a respective bipolar wear sensor 4 of known type.

In particular, the sensor 4 is of the double signal type, as it comprises a wire 5 of conducting material covered in a cladding 6 of insulating material, intended to be electrically powered and embedded in the material of the respective pad 2 so that:
- partial wear of the pad 2 results in removal of the cladding 6 so that there is electrical contact between the wire 5 and the relative disc (connected to a zero potential of said vehicle) when the braking device 3 is used; and
- total wear of the pad 2 results in total shearing of the wire 5.

Therefore said sensor 4 is intended to provide three indications:
- circuit closed, when the corresponding pad 2 is intact;
- shorted to earth, when the corresponding pad 2 is partially worn; and
- circuit open, when the corresponding pad 2 is completely worn.

The monitoring device 1 comprises a cable 7 interconnecting the sensors 4 comprising a number N+1 of sections 8 of electrical wire arranged so that each sensor 4 is inserted, by means of a respective bipolar connector 9, between two successive sections 8 to form one single electrical circuit 10 electrically connecting in series the sensors 4. The circuit 10 is open at the level of the two end sections 8a to define an acquisition input 11. Each section 8 of wire comprises two resistors 12 positioned at the level of respective ends 13 of the section 8 and each having a specific ohmic value RS. It follows that the resistors 12 are electrically in series and, in groups of two, alternate with the sensors 4 along the circuit 10.

The monitoring device 1 comprises, furthermore, a processing electronic control unit 14 with a power supply input 15 connected to a battery 16 of the vehicle, and a power supply output 17 of the sensors 4 connected to the acquisition input 11 of the circuit 10.

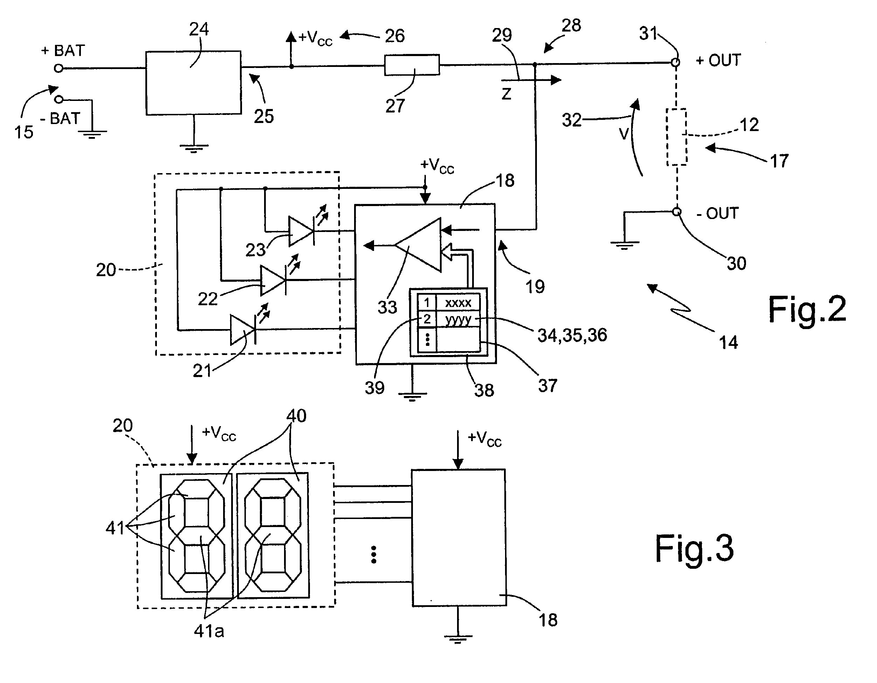

With reference to figure 2, the processing electronic control unit 14 comprises a detection unit 18 with a measurement input 19, which is connected directly to the power supply output 17 and by means of which the detection unit 18 detects a status of the sensors 4; a display unit 20 comprising three LEDs 21, 22, 23, in particular a green LED 21, a yellow LED 22 and a red LED 23, the cathodes of which are appropriately controlled by the detection unit 18 to display the status of the sensors 4; and a stabilised power supply 24, which is powered, in turn, by the battery 16 of the vehicle via the power supply input 15 and is intended to provide, at the level of the output 25, a direct power supply voltage 26 with VCC value to electrically power the detection unit 18 and the display unit 20.

The power supply 24 is furthermore intended to power the circuit 10 via a resistor 27, which is connected between the output 25 and the power supply output 17, or the acquisition input 11 of the circuit 10, and has a specific ohmic value RC of the same order as the sum of the ohmic values RS of the resistors 12 and two orders less than an input impedance of the measurement input 19. Consequently, the resistor 27 forms, together with the resistors 12 in series along the circuit 10, a resistive divider 28 powered by the voltage 26.

The power supply output 17 comprises a first earth terminal 29, which is connected to the vehicle earth, and a second terminal 30 connected to a terminal of the resistor 27.

The power supply of the circuit 10 produces, during use, an electrical current 31 circulating in the divider 28 in a conventional direction which goes from the output 25 to the earth terminal 29. Given the properties of the divider 28, the current 31 produces, between the terminals 29 and 30, an electrical voltage 32 which, in normal operating conditions (all pads 2 intact), has a value VNORM substantially equal to VCC/2.

Partial wear of a pad 2 shorts to earth the respective sensor 4 lowering the voltage 32 to a respective value VUP below VNORM. In particular, the nearer the sensor 4, which indicates a short circuit to earth producing said voltage value 32, is to the signal terminal 30, the lower the value VUP of the voltage 32 with respect to VNORM.

Lastly, when a certain sensor 4 opens, corresponding to total wear of the respective pad 2, the voltage 32 will have a value VUT substantially equal to VCC.

In order to detect the status of the sensors 4, the detection unit 18 comprises a dial test indicator 33, which is intended to compare the voltage 32, measured via the measurement input 19, with a number N+2 of thresholds 34, 35, 36 of electrical voltages arranged in increasing order of voltage values in a table 37, which is stored in a memory 38. In particular, the voltage thresholds comprise:
a number N of increasing pre-alarm thresholds 34, each of which is combined with a respective sensor 4 and has a respective value VUP of the voltage 32 when said sensor 4 indicates a short circuit to earth;
an integrity threshold 35 with a value equal to VNORM which is greater than any value VUP; and
an alarm threshold 36 with a value equal to VUT which is greater than VNORM.

Each threshold 34 is marked by an index 39 corresponding to the order position in the table 37; it is obvious that, given the bijective association between the sensors 4 and the respective thresholds 34, the same index 39 corresponds to each sensor 4.

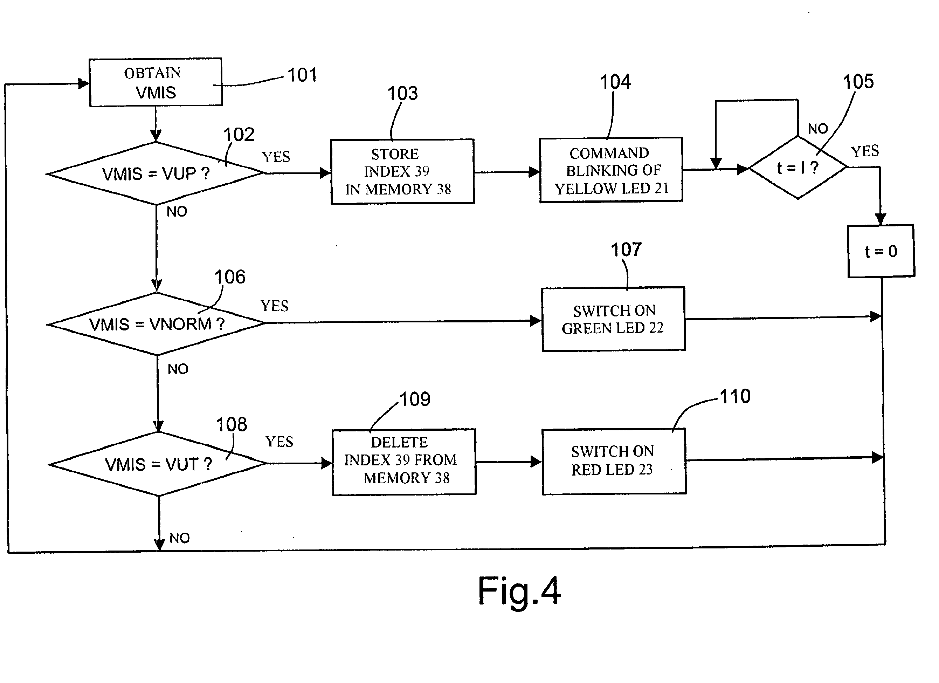

The detection unit 18 is programmed to perform a sequence of operations shown, schematically, by the flow chart of figure 4.

In particular, said sequence of operations comprises an initial block 101, in which measurement of the voltage 32 (VMIS) is obtained via the measuring input 19.

The block 101 is followed by a block 102, in which measurement of the voltage 32 obtained in the block 101 is compared, via the dial test indicator 33, with the thresholds 34 with value VUP1; if measurement of the voltage 32 is near to one of said thresholds 34 (VMIS = VUP), a block 103 is selected, in which the index 39 is stored in the memory 38. The block 103 is followed by a block 104, in which a number of blinking actions of the yellow LED 21 equal to the value of the index 39 stored is commanded in rapid succession. Said operation is periodically repeated, according to a pre-set period of time T (block 105), until measurement of the voltage 32 is near the same threshold 34. In fact, the block 105 is followed by block 101 to permit continuous measurement samplings of the voltage 32.

If measurement of the voltage 32 is not near any of the thresholds 34, the block 102 is followed by a block 106, in which measurement of the voltage 32 is compared with the integrity threshold 35; if measurement of the voltage 32 is near the threshold 35 (VMIS = VNORM), the block 106 is followed by a block 107, in which switch-on of the green LED 22 is commanded.

If measurement of the voltage 32 is not near the threshold 35, the block 106 is followed by a block 108, in which the voltage 32 is compared with the threshold 36; if measurement of the voltage 32 is near the threshold 36 (VMIS = VUT), the block 108 is followed by a block 109, in which the index 39 is cancelled from the memory 38. The block 109 is then followed by a block 110, in which switch-on of the red LED 23 is commanded.

Like block 105, blocks 107 and 110 are also followed by block 101 to obtain successive measurement of the voltage 32. Furthermore, if comparison of the block 108 gives a negative result, then block 108 is followed by block 101.

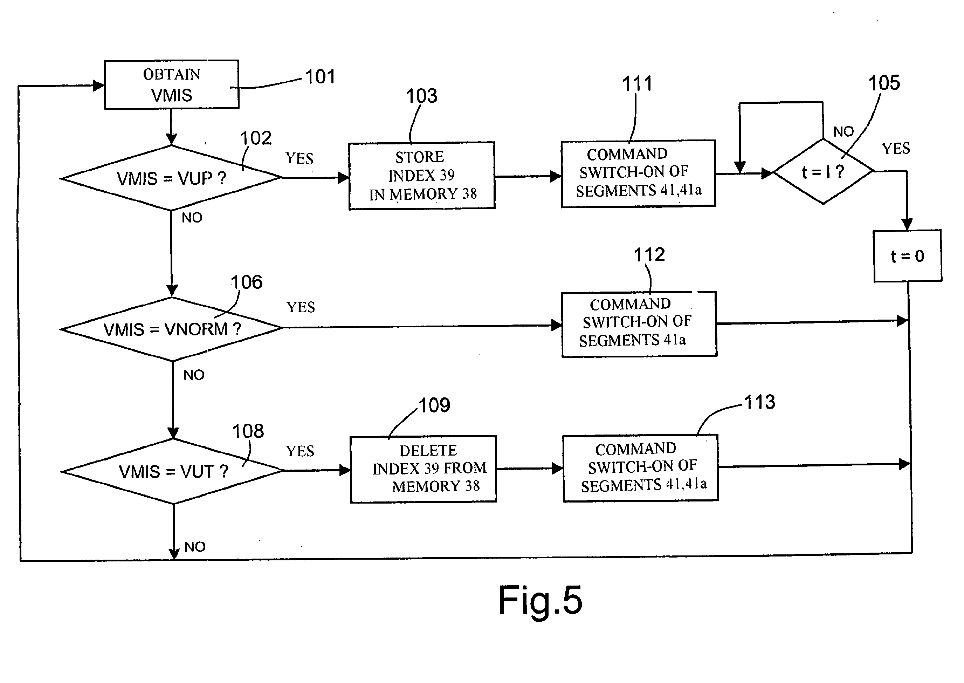

According to the variation of figure 3, the display unit 20 comprises two numerical displays 40 with seven segments 41, 41a commanded by the detection unit 18 by means of the following sequence of operations shown, schematically, in the flow chart of figure 5.

In particular, if the comparison between the measurement of the voltage 32 and one of the thresholds 34 (block 102) gives a positive result, block 103 is selected, which is followed by block 111, in which switch-on of the segments 41, 41a, necessary for displaying the index 39 stored in the memory 38 (block 103), is commanded.

If, on the other hand, both the comparison between measurement of the voltage 32 and the threshold 35 (block 106) gives a positive result (VMIS = VNORM), then block 106 is followed by a block 112, in which the horizontal central segments 41a are switched on.

Lastly, if the comparison between measurement of the voltage 32 and the threshold 36 (block 108) gives a positive result (VMIS = VUT), then block 108 is followed by block 113, in which the segments 41, 41a necessary for displaying an alarm code, for example a letter "A", are switched on.

In a second preferred embodiment not shown, the detection unit 18 is intended to obtain an input resistance measurement at the acquisition input 11, said input resistance depending on the voltage 32 and the current 31 circulating in the electrical circuit 10, and to compare, via the dial test indicator 33, said input resistance with a plurality of impedance thresholds.

According to a third preferred embodiment not shown, each section 8 of wire of the interconnection wiring 7 comprises one single resistor 12, which is positioned at the level of one end 13 of the section 8 and has an ohmic value of 2*RS.

According to a fourth preferred embodiment not shown, the wear monitoring device 1 is applied to a braking system comprising a number N of drum braking devices, each provided with a respective drum comprising two respective shoes provided with respective friction lugs, in at least one of which the electrical wire of a wear sensor is embedded. In this case, partial wear of a friction lug is signalled when the wire of the respective sensor comes into contact with the related drum, shorting the sensor to earth.

## Claims

1. Device (1) for monitoring the wear of friction elements (2) of a vehicle braking system; the braking system comprising a plurality of braking devices (3), a relative plurality of friction elements (2) and a plurality of bipolar wear sensors (4), each of which is able to signal wear of a respective friction element (2); the monitoring device (1) comprising processing means (14) for acquiring and processing wear signals from said sensors (4) and for providing an indication of the wear of said friction elements (2), and interconnection means (7) to connect the sensors (4) to the processing means (14); the monitoring device (1) being **characterised in that** said interconnection means (7) comprise an electrical circuit (10) for interconnecting said sensors (4) in series.

2. Device as claimed in claim 1, wherein said electrical circuit (10) has an acquisition input (11) and comprises a plurality of electrical components (12) each combined with a respective said sensor (4) so that the electrical circuit (10) has, at the acquisition input (11), an electrical characteristic (32), which takes on:
- at least one pre-set first value (VNORM) if the friction elements (2) are intact; and
- at least one second value (VUT, VUP) different from the first value (VNORM) as a consequence of a wear signal coming from at least one sensor (4);
said processing means (14) being intended to discriminate said first value (VNORM) and said second value (VUT, VUP) to provide respective indications of the wear of said friction elements (2).

3. Device as claimed in claim 1, wherein said electrical circuit (10) has an acquisition input (11) and comprises a plurality of electrical components (12) each combined with a respective said sensor (4) so that the electrical circuit (10) has, at the acquisition input (11), an electrical characteristic (32), which takes on:
- at least one pre-set first value (VNORM) if the friction elements (2) are intact;
- at least one second value (VUT) different from the first value (VNORM) if at least one friction element (2) is totally worn; and
- at least one third value (VUP) different from the first value (VNORM) and from the second value (VUT) if at least one friction element (2) is partially worn; said processing means (14) being intended to discriminate said first value (VNORM), said second value (VUT) and said third value (VUP) to provide respective indications of wear of said friction elements (2).

4. Device as claimed in claim 3, wherein said electrical characteristic (32) takes on a plurality of third values (VUP), each of which is produced corresponding to the partial wear of a respective friction element (2); said processing means (14) being intended to discriminate said third (VUP) values to provide respective indications of the wear of said friction elements (2) so as to identify which friction element (2) is subject to partial wear.

5. Device as claimed in any of the claims from 2 to 4, wherein said processing means (14) comprise a memory (38) and a dial test indicator (33), which is intended to compare a measurement of said electrical characteristic (32) with a plurality of thresholds (34, 35, 36) stored in the memory (38) according to a set order.

6. Device as claimed in claim 5, wherein said thresholds (34, 35, 36) comprise pre-alarm thresholds (34) intended to discriminate a condition of partial wear of a respective friction element (2); each of said pre-alarm thresholds (34) being combined with a respective index (39); said memory (38) being intended to store said index (39) corresponding to a said pre-alarm threshold (34).

7. Device as claimed in claim 6, wherein said processing means (14) comprise a display unit (24) provided with optical indicators (21, 22, 23; 40) intended to produce a series of blinking actions corresponding to said index (39).

8. Device as claimed in one of the claims from 2 to 7, wherein said electrical component (12) comprises a least one resistor (12) positioned along said electrical circuit (10); said electrical characteristic (32) consisting of an electrical voltage (32) present at said acquisition input (11) .

9. Device as claimed in one of the claims from 2 to 7, wherein said electrical component (12) comprises at least one resistor (12) positioned along said electrical circuit (10); said electrical characteristic consisting of a resistance present at said acquisition input (11).

## Patentansprüche

1. Vorrichtung (1) zum Überwachen des Verschleißes von Reibelementen (2) eines Fahrzeugbremssystems; wobei das Bremssystem mehrere Bremsvorrichtungen (3), eine entsprechende Mehrzahl von Reibelementen (2) und mehrere bipolare Verschleißsensoren (4), wovon jeder einen Verschleiß eines entsprechenden Reibelements (2) signalisieren kann, umfasst; wobei die Überwachungsvorrichtung (1) Verarbeitungsmittel (14) zum Erfassen und Verarbeiten von Verschleißsignalen von den Sensoren (4) und zum Bereitstellen einer Angabe des Verschleißes der Reibelemente (2) und Verbindungsmittel (7) zum Verbinden der Sensoren (4) mit den Verarbeitungsmitteln (14) umfasst; wobei die Überwachungsvorrichtung (1) **dadurch gekennzeichnet ist, dass** die Verbindungsmittel (7) eine elektrische Schaltung (10) zum Verbinden der Sensoren (4) in einer Reihenschaltung umfassen.

2. Vorrichtung nach Anspruch 1, wobei die elektrische Schaltung (10) einen Erfassungseingang (11) besitzt und mehrere elektrische Komponenten (12) umfasst, wovon jede mit einem entsprechenden Sensor (4) kombiniert ist, so dass die elektrische Schaltung (10) an dem Erfassungseingang (11) eine elektrische Charakteristik (32) besitzt, die
- wenigstens einen im Voraus festgelegten ersten Wert (VNORM) annimmt, falls die Reibelemente (2) intakt sind; und
- wenigstens einen von dem ersten Wert (VNORM) verschiedenen zweiten Wert (VUT, VUP) als Folge eines von wenigstens einem Sensor (4) ankommenden Verschleißsignals annimmt;
wobei die Verarbeitungsmittel (14) zwischen dem ersten Wert (VNORM) und dem zweiten Wert (VUT, VUP) unterscheiden sollen, um jeweilige Angaben des Verschleißes der Reibelemente (2) bereitzustellen.

3. Vorrichtung nach Anspruch 1, wobei die elektrische Schaltung (10) einen Erfassungseingang (11) besitzt und mehrere elektrische Komponenten (12) umfasst, wovon jede mit einem entsprechenden Sensor (4) kombiniert ist, so dass die elektrische Schaltung (10) am Erfassungseingang (11) eine elektrische Charakteristik (32) hat, die
- wenigstens einen im Voraus festgelegten ersten Wert (VNORM) annimmt, falls die Reibelemente (2) intakt sind;
- wenigstens einen von dem ersten Wert (VNORM) verschiedenen zweiten Wert (VUT) annimmt, falls wenigstens ein Reibelement (2) vollständig verschlissen ist; und
- wenigstens einen von dem ersten Wert (VNORM) und von dem zweiten Wert (VUT) verschiedenen dritten Wert (VUP) annimmt, falls wenigstens ein Reibelement (2) teilweise verschlissen ist;
wobei die Verarbeitungsmittel (14) zwischen dem ersten Wert (VNORM), dem zweiten Wert (VUT) und dem dritten Wert (VUP) unterscheiden sollen, um jeweilige Angaben des Verschleißes der Reibelemente (2) bereitzustellen.

4. Vorrichtung nach Anspruch 3, wobei die elektrische Charakteristik (32) mehrere dritte Werte (VUP) annimmt, wovon jeder entsprechend dem teilweisen Verschleiß eines entsprechenden Reibelements (2) erzeugt wird; wobei die Verarbeitungsmittel (14) zwischen den dritten Werten (VUP) unterscheiden sollen, um jeweilige Angaben des Verschleißes der Reibelemente (2) bereitzustellen, um so dasjenige Reibelement (2) zu identifizieren, das einen teilweisen Verschleiß zeigt.

5. Vorrichtung nach einem der Ansprüche 2 bis 4, wobei die Verarbeitungsmittel (14) einen Speicher (38) und eine Prüfmessvorrichtung (33), die eine Messung der elektrischen Charakteristik (32) mit mehreren in dem Speicher (38) gespeicherten Schwellenwerten (34, 35, 36) in einer festgelegten Reihenfolge vergleichen soll, umfassen.

6. Vorrichtung nach Anspruch 5, wobei die Schwellenwerte (34, 35, 36) Voralarm-Schwellenwerte (34) umfassen, die einen Zustand eines teilweisen Verschleißes eines jeweiligen Reibelements (2) unterscheiden sollen; wobei jeder der Voralarm-Schwellenwerte (34) mit einem entsprechenden Index (39) kombiniert wird; wobei der Speicher (38) den Index (39) entsprechend einem Voralarm-Schwellenwert (34) speichern soll.

7. Vorrichtung nach Anspruch 6, wobei die Verarbeitungsmittel (14) eine Anzeigeeinheit (24) umfassen, die mit optischen Anzeigern (21, 22, 23; 40) versehen ist, die eine Reihe von Blinkvorgängen entsprechend dem Index (39) erzeugen sollen.

8. Vorrichtung nach einem der Ansprüche 2 bis 7, wobei die elektrische Komponente (12) wenigstens einen Widerstand (12) umfasst, der längs der elektrischen Schaltung (10) angeordnet ist; wobei die elektrische Charakteristik (32) aus einer an dem Erfassungseingang (11) anliegenden elektrischen Spannung (32) besteht.

9. Vorrichtung nach einem der Ansprüche 2 bis 7, wobei die elektrische Komponente (12) wenigstens einen Widerstand (12) umfasst, der längs der elektrischen Schaltung (10) angeordnet ist; wobei die elektrische Charakteristik aus einem bei dem Erfassungseingang (11) vorhandenen ohmschen Widerstand besteht.

## Revendications

1. Dispositif (1) de surveillance de l'usure des éléments de friction (2) d'un système de freinage de véhicule ; le système de freinage comprenant une pluralité de dispositifs de freinage (3), une pluralité associée d'éléments de friction (2) et une pluralité de capteurs d'usure bipolaires (4), dont chacun a la capacité de signaler l'usure d'un élément de friction respectif (2) ; le dispositif de surveillance (1) comprenant des moyens de traitement (14) destinés à acquérir et traiter les signaux d'usure desdits capteurs (4) et à fournir une indication de l'usure desdits éléments de friction (2) et des moyens d'interconnexion (7) pour connecter les capteurs (4) aux moyens de traitement (14) ; le dispositif de surveillance (1) étant **caractérisé en ce que** lesdits moyens d'interconnexion (7) comprennent un circuit électrique (10) destiné à interconnecter lesdits capteurs (4) en série.

2. Dispositif selon la revendication 1, dans lequel ledit circuit électrique (10) possède une entrée d'acquisition (11) et comprend une pluralité de composants électriques (12), chacun combiné à l'un desdits capteurs respectifs (4) de telle sorte que le circuit électrique (10) présente, au niveau de l'entrée d'acquisition (11), une caractéristique électrique (32), qui prend :
au moins une première valeur prédéfinie (VNORM) si les éléments de friction (2) sont intacts ; et
au moins une seconde valeur (VUT, VUP), différente de la première valeur (VNORM), résultant d'un signal d'usure provenant d'au moins un capteur (4) ;
lesdits moyens de traitement (14) ayant pour but de distinguer ladite première valeur (VNORM) et ladite seconde valeur (VUT, VUP) pour donner des indications respectives de l'usure desdits éléments de friction (2).

3. Dispositif selon la revendication 1, dans lequel ledit circuit électrique (10) possède une entrée d'acquisition (11) et comprend une pluralité de composants électriques (12), chacun combiné à l'un desdits capteurs respectifs (4), de telle sorte que le circuit électrique (10) présente, au niveau de l'entrée d'acquisition (11), une caractéristique électrique (32), qui prend :
au moins une première valeur prédéfinie (VNORM) si les éléments de friction (2) sont intacts ;
au moins une seconde valeur (VUT) différente de la première valeur (VNORM) si au moins un élément de friction (2) est totalement usé ; et
au moins une troisième valeur (VUP) différente de la première valeur (VNORM) et de la seconde valeur (VUT) si au moins un élément de friction (2) est partiellement usé;
lesdits moyens de traitement (14) étant destinés à distinguer ladite première valeur (VNORM), ladite seconde valeur (VUT) et ladite troisième valeur (VUP) pour donner des indications respectives d'usure desdits éléments de friction (2).

4. Dispositif selon la revendication 3, dans lequel ladite caractéristique électrique (32) prend une pluralité de troisièmes valeurs (VUP), dont chacune est produite en fonction de l'usure partielle d'un élément de friction respectif (2) ; lesdits moyens de traitement (14) ayant pour but de distinguer lesdites troisièmes valeurs (VUP) afin de donner des indications respectives de l'usure desdits éléments de friction (2) afin d'identifier quel élément de friction (2) est soumis à cette usure partielle.

5. Dispositif selon l'une quelconque des revendications 2 à 4, dans lequel lesdits moyens de traitement (14) comprennent une mémoire (38) et un testeur à cadran (33), qui a pour but de comparer une mesure de ladite caractéristique électrique (32) à une pluralité de seuils (34, 35, 36) stockés dans la mémoire (38) selon un ordre défini.

6. Dispositif selon la revendication 5, dans lequel lesdits seuils (34, 35, 36) comprennent des seuils de pré-alarme (34) ayant pour but de distinguer une condition d'usure partielle d'un élément de friction respectif (2) ; chacun desdits seuils de pré-alarme (34) étant combiné avec un indice (39) respectif ; ladite mémoire (38) ayant pour but de stocker ledit indice (39) correspondant à un dit seuil de pré-alarme (34).

7. Dispositif selon la revendication 6, dans lequel lesdits moyens de traitement (14) comprennent une unité d'affichage (24) comportant des indicateurs optiques (21, 22, 23; 40) ayant pour but d'effectuer une série de clignotements correspondant audit indice (39).

8. Dispositif selon l'une des revendications 2 à 7, dans lequel ledit composant électrique (12) comprend au moins une résistance (12) positionnée le long dudit circuit électrique (10) ; ladite caractéristique électrique (32) consistant en une tension électrique (32) présente au niveau de ladite entrée d'acquisition (11).

9. Dispositif selon l'une des revendications 2 à 7, dans lequel ledit composant électrique (12) comprend au moins une résistance (12) positionnée le long dudit circuit électrique (10) ; ladite caractéristique électrique consistant en une résistance présente au niveau de ladite entrée d'acquisition (11).
